# EUROPEAN PATENT SPECIFICATION

(11) **EP 3 369 794 B1**
(45) Date of publication and mention of the grant of the patent: **27.12.2023**
(21) Application number: 18156320.6
(22) Date of filing: 12.02.2018
(51) Int. Cl.: C09J 11/04, B32B 7/12, C08K 3/22, B32B 27/06, B32B 27/30

(54) **LAMINATED STRUCTURE**
LAMINIERTE STRUKTUR
STRUCTURE STRATIFIÉE

(30) Priority: 02.03.2017 GB 201703390
(43) Date of publication of application: 05.09.2018
(73) Proprietor: Anglian Windows Limited, Norwich, Norfolk NR6 6EJ (GB)
(72) Inventor: Kellett, Paul, Norwich, Norfolk NR6 6EJ (GB); Cubitt, Julian, Norwich, Norfolk NR6 6EJ (GB)
(74) Representative: Forsyth, Helen Jane

(56) References cited:
- EP-A1- 2 520 626
- WO-A1-2006/035945
- CN-A- 103 589 350
- CN-A- 106 221 620
- JP-B2- 4 706 126
- KR-B1- 101 633 058
- TW-A- 200 944 571
- US-A1- 2004 014 863
- US-A1- 2013 078 460

## Description

### Field of the invention

This invention relates to a laminated structure and in particular to adhesive used in such a structure.

### Background to the invention

Laminated structures are used in many industries with one or more layers applied to a base structure so as to improve the characteristics of the base structure. Decorative layers, or foils, are often used to alter appearance and to increase the reflectance of a structure so as to provide protection from solar radiation, for example in window frames, doors and car body parts. However even with the protective foils, solar radiation still causes differing thermal expansion between the different layers of the laminated structure and between components forming the base structure. This causes the structure to change dimensions and warp over time which affects fitting of the structure, with particular problems being encountered with windows and doors made of plastics material.

TW200944571 teaches a heat insulating adhesive arrangement for applying to architectural elements where a light reflective material is dispersed in a heat insulating adhesive to increase near-infra-red light reflectance and visible light transmittance. JP4706126 teaches the application of decorative sheets to a decorative panel by using two decorative sheets to decorate upper and lower surfaces of a base.

### Summary of the invention

In accordance with one aspect of the present invention, there is provided a laminated structure comprising an adhesive layer disposed between a substrate, such as a window frame, door frame or car body part made of plastics material, and a protective layer, such as a decorative foil, characterised in that the substrate comprises an insert for a building aperture and the adhesive layer comprises infra-red reflective particles of titanium dioxide, the infra-red reflective particles forming 2 to 10 per cent of the adhesive layer by weight. By incorporating infra-red reflective particles within the adhesive layer, infra-red radiation from the sun that penetrates the protective layer can be reflected away from the substrate, so reducing thermal expansion of the substrate. Any reduction in the amount of infra-red radiation reaching the substrate will delay warping of the structure and thus structures such as windows and doors will fit well within an aperture for longer, so increasing the useable lifetime of the structure.

The protective layer is preferably an external surface and thus in use is exposed to solar radiation.

The insert for a building aperture may be a window frame or door, typically made from plastics material, often as a plurality of interconnecting plastics parts.

Preferably the adhesive matrix is a hot melt glue, such as a polyurethane glue.

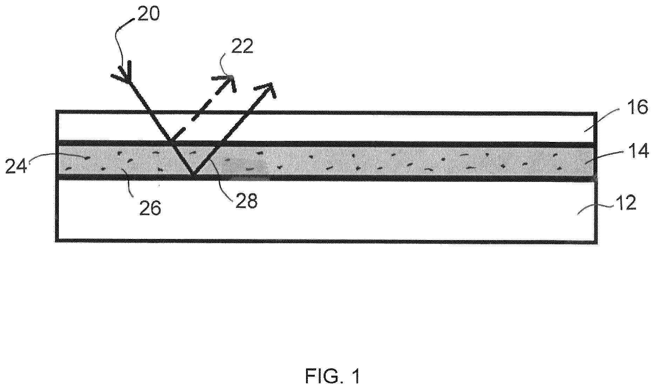

The invention will now be described, by way of example, with reference to the accompanying Figure 1 which shows a schematic cross section through a laminated structure.

### Description

Figure 1 shows a laminated structure 10 comprising substrate 12, for example a window frame made of interconnected elements of plastics material, and adhesive layer 14 used to secure decorative foil layer 16 to substrate 12. Infra-red radiation 20 from the sun is incident on foil 16. Whilst foil 16 reflects some of the infra-red radiation 22 to reduce heating of substrate 12, foil 16 does not completely block the infra-red radiation and some radiation passes through foil 16 to reach surface 12.

In accordance with the invention, reflective particles 24 of titanium dioxide are dispersed in adhesive matrix 26 so that infra-red radiation 28 passing through foil 16 is reflected back through foil 16 by particles 24 and away from substrate 12.

Typically foil 16 is a polymer foil of thickness up to 0.7mm. One suitable foil is a PVC foil of thickness around 0.2mm as supplied by Homschuch GmbH, and in particular Homschuch Coolcolour foil type F4362032 Kirsche Piemont cc. Other suitable foils include Renolit MX 46738 P367 200 Black Cherry.

The titanium dioxide particles are typically Altiris particles produced by Huntsman Corporation. Adhesive matrix 26 is typically hot melt polyurethane glue and is loaded with titanium dioxide particles to around 2 per cent by weight. Typically the adhesive matrix is applied and controlled using application weights between 30 to 50 g/m² for PVC foils, 50 to 70 g/m² for decorative papers and 80 to 100 g/m² for veneers. A density of around 1.1 g/m³ is obtained once the adhesive is cured. Increased loading of titanium dioxide patches in the adhesive and increased thickness of the adhesive wall both act to improve infra-red reflectance of adhesive layer 14.

By adding infra-red reflecting particles to adhesive layer 14, substrate 12 has reduced heat build-up over time which delays warping of structure 10 and ensures that structures such as windows and doors will fit well within an aperture for longer, so increasing the useable lifetime of the structure. Improvements in infra-red reflectance of around thirty percent can be achieved where substrate 12 is infra-red absorbing, i.e. a black or coloured substrate. The heat build-up can be reduced by around 3.5 degrees for such a substrate which extends the product lifetime.

Using particles 24 within glue matrix 26 provides a reflectance enhancing layer between the substrate and the foil which acts to reduce heat build up. Providing infra-red reflecting particles 24 at the boundary of the substrate and adhesive 14 is more cost effective than incorporating the particles throughout the substrate material.

## Claims

1. A laminated structure comprising an adhesive layer (14) disposed between a substrate 12 and a protective layer (16), **characterised in that** the substrate (12) comprises an insert for a building aperture and the adhesive layer (14) comprises infra-red reflective particles (24) of titanium dioxide, the infra-red reflective particles (24) forming 2 to 10 per cent of the adhesive layer (14) by weight.

2. A laminated structure according to claim 1, wherein the protective layer (16) is an external surface.

3. A laminated structure according to any of the preceding claims, wherein the adhesive layer (14) comprises an adhesive matrix (26) in which the infra-red reflective particles (24) are dispersed.

4. A laminated structure according to claim 3, wherein the adhesive matrix (26) is a hot melt glue.

## Patentansprüche

1. Laminierte Struktur umfassend eine Klebstoffschicht (14), die zwischen einem Substrat 12 und einer Schutzschicht (16) angeordnet ist, **dadurch gekennzeichnet, dass** das Substrat (12) einen Einsatz für eine Gebäudeöffnung umfasst und die Klebstoffschicht (14) infrarotreflektierende Partikel (24) aus Titandioxid umfasst, wobei die infrarotreflektierenden Partikel (24) 2 bis 10 Gewichtsprozent der Klebstoffschicht (14) bilden.

2. Laminierte Struktur gemäß Anspruch 1, wobei die Schutzschicht (16) eine Außenfläche ist.

3. Laminierte Struktur gemäß einem der vorstehenden Ansprüche, wobei die Klebstoffschicht (14) eine Klebstoffmatrix (26) umfasst, in der die infrarotreflektierenden Partikel (24) dispergiert sind.

4. Laminierte Struktur gemäß Anspruch 3, wobei die Klebstoffmatrix (26) ein Heißkleber ist.

## Revendications

1. Structure stratifiée comprenant une couche d'adhésif (14) disposée entre un substrat 12 et une couche protectrice (16), **caractérisée en ce que** le substrat (12) comprend un insert pour une ouverture de bâtiment et la couche d'adhésif (14) comprend des particules réfléchissant les infrarouges (24) composées de dioxyde de titane, les particules réfléchissant les infrarouges (24) formant 2 à 10 pour cent de la couche d'adhésif (14) en poids.

2. Structure stratifiée selon la revendication 1, la couche protectrice (16) étant une surface externe.

3. Structure stratifiée selon l'une quelconque des revendications précédentes, la couche d'adhésif (14) comprenant une matrice d'adhésif (26) dans laquelle les particules réfléchissant les infrarouges (24) sont dispersées.

4. Structure stratifiée selon la revendication 3, la matrice d'adhésif (26) étant une colle thermofusible.
